# EUROPÄISCHE PATENTSCHRIFT

(11) **EP 0 434 954 B1**
(45) Veröffentlichungstag und Bekanntmachung des Hinweises auf die Patenterteilung: **01.03.1995**
(21) Anmeldenummer: 90121703.4
(22) Anmeldetag: 13.11.1990
(51) Int. Cl.: B64C 1/20, B64D 9/00, B65D 90/00

(54) **Riegelelement zum Arretieren von Frachtstücken**
Clamping element for holding freight fast
Elément de verrouillage pour bloquer du fret

(30) Priorität: 27.12.1989 DE 3943077
(43) Veröffentlichungstag der Anmeldung: 03.07.1991
(73) Patentinhaber: Daimler-Benz Aerospace Airbus Gesellschaft mit beschränkter Haftung, 21129 Hamburg (DE)
(72) Erfinder: Eilenstein, Wilfried, W-2805 Stuhr 2 (DE); Vogg, Günter, W-2800 Bremen (DE)
(74) Vertreter: Hansmann, Dierk, Dipl.-Ing.

(56) Entgegenhaltungen:
- EP-A- 0 034 834
- EP-A- 0 243 137
- DE-C- 3 222 202
- FR-A- 2 500 805
- US-A- 3 796 397
- US-A- 4 372 715

## Beschreibung

Die Erfindung betrifft ein zum Arretieren von Frachtstücken im Frachtraum von Luftfahrzeugen mit zwei beim Transport innerhalb des Frachtraumes von den Frachtstücken überrollbaren Riegeln, die in einem am Frachtraumboden gehalterten Gehäuse schwenkbar angeordnet und in dieses absenkbar sind und die durch je eine exzentrisch zur jeweiligen Schwenkachse angreifende Feder in eine Verriegelungsstellung bringbar sind, bei der die Riegel aus der Förderebene hervorstehen, wobei die Riegel im Gehäuse so auf den mit seitlichem Abstand parallel zueinander angeordneten Schwenkachsen gehaltert sind, daß ihre Riegelklauen in entgegengesetzte Richtungen weisen, die in etwa senkrecht zur Förderrichtung der Frachtstücke liegen.

Derartige Riegelelemente werden unter anderem als sogenannte YZ-Riegel in Frachtladesystemen eingesetzt und dienen dann dem Zweck, das aus Paletten oder Containern bestehende Frachtgut in seiner jeweiligen Stauposition im Frachtraum in lateraler und vertikaler Richtung zu fixieren, indem die Riegel über entsprechende Vorsprünge der Frachtstücke greifen. Ein derartiges Riegelelement ist aus der EP-A-0 243 137 bekannt.

Dieses bekannte Riegelelement ist geeignet, das bei YZ-Riegeln, die seitlich an den Frachtstücken angreifen, bestehende Problem der unterschiedlichen Breiten der zu verstauenden Frachtstücke zu lösen. So werden häufig in unterschiedlichen Bereichen des Frachtraumes einerseits Container oder Paletten mit einer Breite von 125 Zoll und andererseits solche mit einer Breite von nur 62 Zoll geladen. Letztere werden dabei auf einem für 125 Zoll breite Frachtstücke vorgesehenen Stellplatz nebeneinander so angeordnet, daß zwischen ihnen nur ein seitlicher Abstand von 1 Zoll gegeben ist.

Die dabei an derartige Riegelelemente gestellte Anforderung besteht darin, daß die aus dem Frachtraumboden hervorstehenden Riegel beim Transport von Frachtstücken mit 125 Zoll Breite in der Förderrichtung von diesen überrollbar sein sollen.

Bei dem bekannten Riegelelement sind zu diesem Zweck zwei zusätzliche Schwenkhebel vorgesehen, die von den anrollenden Frachtstücken zunächst beaufschlagt werden und die dann ihrerseits die Riegel gegen die Kraft der Federn unter die Förderebene drücken.

Schließlich ist aus der DE-PS 32 22 202 ein Riegelelement bekanntgeworden, das, wenn es von einem Frachtstück aus der der Riegelklaue abgewandten Richtung überrollt wird, unter die Ebene des Frachtraumbodens gedrückt wird, das nach dem Überrollen unter der Kraft der Zugfeder wieder in seine Ausgangslage zurückkehrt und das in Gegenrichtung die Frachtstücke sperrt bzw. einen Entsperrvorgang erfordert.

Aufgabe der Erfindung ist es, ein Riegelelement der eingangs genannten Art so auszubilden, daß es einen möglichst einfachen, kompakten Aufbau aufweist und daß insbesondere eine beidseitige Überrollbarkeit in der Förderebene erreicht wird, ohne daß hierzu zusätzliche, sich aus dem Riegelgehäuse in den Frachtraum ersteckende Betätigungselemente erforderlich sind.

Diese Aufgabe wird erfindungsgemäß durch die im Kennzeichen des Anspruches 1 angegebenen Merkmale gelöst. Vorteilhafte Weiterbildungen, die insbesondere der weiteren Verbesserungen der Zuverlässigkeit des erfindungsgemäßen Riegelelementes sowie seiner vielseitigen Verwendbarkeit dienen, sind in den weiteren Ansprüchen angegeben.

Im folgenden soll die Erfindung anhand eines in der Zeichnung dargestellten Ausführungsbeispiels näher erläutert werden. Es zeigen:
- Fig. 1: eine seitliche Ansicht eines in die Verriegelungsposition ausgeschwenkten Riegelelementes,
- Fig. 2: eine um 90 Grad gedrehte Ansicht der in Fig. 1 dargestellten Anordnung,
- Fig. 3: die Anordnung gemäß Fig. 1 in Draufsicht und
- Fig. 4: das Riegelelement gemäß Fig. 1 in abgesenkter Position der Riegelklauen.

In den Figuren sind gleiche Bauteile mit den gleichen Bezugszeichen versehen.

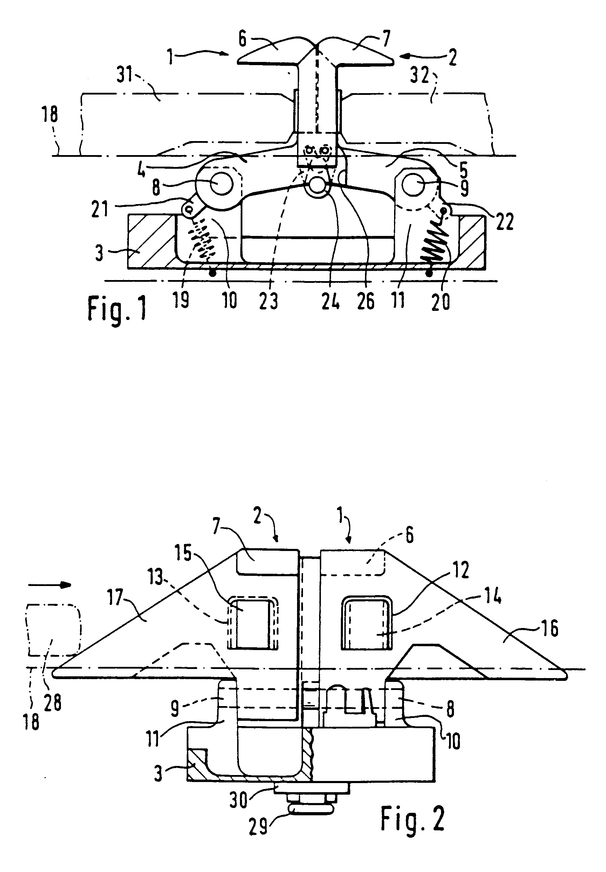

Das in den Figuren 1 bis 4 dargestellte Riegelelement besteht aus zwei Riegel 1 und 2, die in einem Gehäuse 3 angeordnet sind. Jeder der Riegel 1 und 2 weist einen Winkelhebel 4 bzw. 5 auf, an dessen oberem Ende jeweils eine Riegelklaue 6 bzw. 7 angeordnet ist und dessen anderes Ende mit einer Bohrung versehen ist. Mit diesen Bohrungen sind die Winkelhebel 4,5 so auf zwei im Abstand voneinander parallel angeordneten Bolzen 8 bzw. 9 gehaltert, daß die Riegelklauen 6 und 7 in entgegengesetzte Richtungen weisen. Die Bolzen 8 und 9, die die Schwenkachsen für die Riegel 1 bzw. 2 bilden, sind in Lagerböcken 10 bzw. 11 gelagert, die in das Gehäuse 3 integriert sind und deren Abstand voneinander so gewählt ist, daß er in etwa der doppelten Länge der an ihnen angelenkten Schenkel der Winkelhebel 4 bzw. 5 entspricht. Überdies sind die Lagerböcke 10 bzw. 11 um einen Betrag, der in etwa der Breite der Winkelhebel 4 bzw. 5 entspricht, in einer Richtung parallel zu den Schwenkachsen gegeneinander versetzt angeordnet. In der in den Figuren 1 bis 3 dargestellten ausgeschwenkten Position der Riegel 1 und 2 sind dadurch die die Riegelklauen 6 bzw. 7 tragenden Schenkel der Winkelhebel 4 und 5 mit geringem Abstand nebeneinander positioniert.

Diese in der ausgefahrenen Position der Riegel 1 und 2 in etwa senkrecht stehenden Schenkel sind jeweils mit einer Ausnehmung 12 bzw. 13 versehen, in der jeweils eine um eine vertikale Achse drehbar gehalterte Walze 14 bzw. 15 angeordnet ist. An diese Schenkel ist weiterhin jeweils ein seitlicher Ansatz 16 bzw. 17 einstückig angeformt. Die Ansätze 16 bzw. 17 weisen jeweils die Form eines rechtwinkligen Dreiecks auf, das in der ausgefahrenen Stellung der Riegel 1 bzw. 2 in etwa senkrecht steht und dessen Hypotenuse in dieser Position mit der in den Figuren angedeuteten Förderebene 18 einen spitzen Winkel bildet. Die Ansätze 16 bzw. 17 sind so an den Winkelhebeln 4 und 5 angeordnet, daß sie sich in Richtung parallel zu den von den Bolzen 8 bzw. 9 gebildeten Schwenkachsen in entgegengesetzter Richtung erstrecken.

Zum verschwenken der Riegel 1 und 2 in die in den Figuren 1 bis 3 dargestellte Verriegelungsposition sind Zugfedern 19 bzw. 20 vorgesehen, die über Hebelarme 21 bzw. 22 exzentrisch zur jeweiligen Schwenkachse an den Winkelhebeln 4 bzw. 5 angreifen. Die mittleren Bereiche der Winkelhebel 4 und 5 sind weiterhin über ein Hebelgelenk 23,24 miteinander gekoppelt. Eine Führungskulisse 25 verhindert dabei eine seitliches Auswandern der das Hebelgelenk bildenden Hebel 23 bzw. 24. Schließlich sind die Winkelhebel 4 und 5 auf den einander gegenüberliegenden Seitenflächen mit Anschlägen 26 und 27 versehen, mit denen sich die Riegel 1 und 2 in der ausgefahrenen Position gegeneinander abstützen und die zusammen mit den Zugfedern 19 und 20 die Riegel 1 und 2 in der ausgeschwenkten Position fixieren.

Wie aus der Darstellung in Fig. 2 hervorgeht, wird das Riegelelement so in den Frachtraumboden eines Flugzeuges eingesetzt, daß die als schräge Auflaufflächen wirkenden Ansätze 16 und 17 in die in Fig. 1 durch einen Pfeil gekennzeichnete Förderrichtung für ein Frachtstück 28 weisen, die zugleich der Flugzeuglängsachse entspricht. Das Gehäuse wird mittels Schnellverschlüssen 29 an im Frachtraumboden verlegten Schienenprofilen 30 verriegelt. Sofern die Frachtladung aus zwei nebeneinanderliegend zu transportierenden Frachtstücken 31 und 32 halber Breite, in diesem Fall je 62 Zoll, besteht, werden diese durch die Walzen 14 bzw. 15 in lateraler Richtung ("Y-Richtung") und durch die Riegelklauen 6 und 7 in vertikaler Richtung ("Z-Richtung") in ihrer Stauposition fixiert. Der Durchmesser der Walzen 14 und 15 ist dabei so gewählt, daß er dem zwischen den beiden Frachtstücken verbleibenden freien seitlichen Abstand von etwa einem Zoll entspricht.

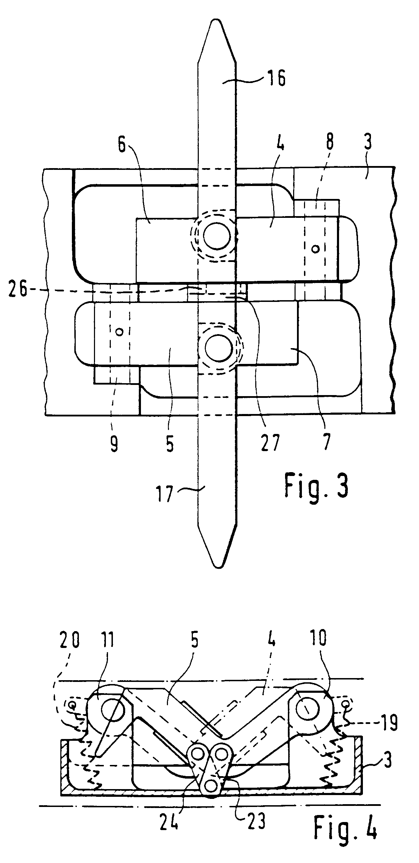

Wird andererseits, wie in Fig. 2 dargestellt, ein Frachtstück 28 etwa doppelter Breite, in diesem Fall 125 Zoll, geladen, so wird, sobald das Frachtstück die Auflauffläche 17 erreicht, der diesem nächstgelegene Riegel 2 niedergedrückt. Über das Hebelgelenk 23,24 wird der zweite Riegel 1 mitgenommen. Das Riegelelement nimmt dann, so lange sich das Frachtstück über diesem befindet, die in Fig. 4 dargestellte eingefahrene Position ein. Nach dem Überrollen bzw. Entfernen des Frachtstückes werden die Riegel 1 und 2 durch die Zugfedern 19 und 20 wieder in die ausgeschwenkte Verriegelungsposition gebracht.

### Bezugszeichenliste

- 1,2: Riegel
- 3: Gehäuse
- 4,5: Winkelhebel
- 6,7: Riegelklaue
- 8,9: Bolzen
- 10,11: Lagerböcke
- 12,13: Ausnehmung
- 14,15: Walze
- 16,17: Ansätze (Auflaufflächen)
- 18: Förderebene
- 19,20: Zugfedern
- 21,22: Hebelarme
- 23,24: Hebelgelenk
- 25: Führungskulisse
- 26,27: Anschläge
- 28,31,32: Frachtstück
- 29: Schnellverschlüsse
- 30: Schienenprofile

## Patentansprüche

1. Riegelelement zum Arretieren von Frachtstücken im Frachtraum von Luftfahrzeugen mit zwei beim Transport innerhalb des Frachtraumes von den Frachtstücken überrollbaren Riegeln (1,2), die in einem am Frachtraumboden gehalterten Gehäuse (3) schwenkbar angeordnet und in dieses absenkbar sind und die durch je eine exzentrisch zur jeweiligen Schwenkachse (8,9) angreifende Feder (19,20) in eine Verriegelungsstellung bringbar sind, bei der die Riegel (1,2) aus der Förderebene (18) hervorstehen, wobei die Riegel (1,2) im Gehäuse (3) so auf den mit seitlichem Abstand parallel zueinander angeordneten Schwenkachsen (8,9) gehaltert sind, daß ihre Riegelklauen (6,7) in entgegengesetzte Richtungen weisen, die in etwa senkrecht zur Förderrichtung der Frachtstücke (28,31,32) liegen, dadurch gekennzeichnet, daß die Riegel (1,2) mit sich in etwa parallel zu den Schwenkachsen (8,9) in entgegengesetzter Richtung ersteckenden schrägen Auflaufflächen (16,17) versehen sind und über ein exzentrisch zu den Schwenkachsen (8,9) angreifendes Hebelgelenk (23,24) miteinander gekoppelt sind.

2. Riegelelement nach Anspruch 1, dadurch gekennzeichnet, daß jeder Riegel (1,2) eine um eine vertikale Achse drehbar gehalterte Walze (14,15) aufweist, die in Höhe der Bodenflächen der Frachtstücke (28,31,32) angeordnet ist.

3. Riegelelement nach einem der Ansprüche 1 oder 2, dadurch gekennzeichnet, daß jeder Riegel (1,2) mit einem Anschlag (26,27) versehen ist, der im Bereich zwischen den Riegeln (1,2) liegt, und daß sie in der ausgeschwenkten Position der Riegel (1,2) zur gegenseitigen Anlage gelangen.

4. Riegelelement nach einem der Ansprüche 1 bis 3, dadurch gekennzeichnet, daß an den die Riegelklauen (6,7) tragenden Winkelhebeln Führungskulissen (25) für das Hebelgelenk (23,24) vorgesehen sind.

## Claims

1. Locking element for securing cargo items in the cargo compartment of aircraft, with two locking members (1, 2) over which the cargo items can roll while being conveyed inside the cargo compartment, which are pivotably arranged in a housing (3) fastened to the cargo compartment floor, can be lowered into this housing and brought into a locking position by a respective spring (19, 20) which acts eccentrically to the respective pivot shaft (8, 9), the locking members (1, 2) projecting out of the conveying plane (18) and being fastened in the housing (3) to the pivot shafts (8, 9), which are arranged at a lateral spacing parallel to one another, such that their locking claws (6, 7) point in opposite directions which lie approximately normal to the direction in which the cargo items (28, 31, 32) are conveyed, characterised in that the locking members (1, 2) are provided with inclined abutment surfaces (16, 17), which extend in opposite directions approximately parallel to the pivot shafts (8, 9), and are coupled together by means of a lever joint (23, 24) acting eccentrically to the pivot shafts (8, 9).

2. Locking element according to claim 1, characterised in that each locking member (1, 2) comprises a roller (14, 15) which is rotatably fastened about a vertical axis and arranged on a level with the bottom surfaces of the cargo items (28, 31, 32).

3. Locking element according to any one of claims 1 and 2, characterised in that each locking member (1, 2) is provided with a stop (26, 27) which lies in the area between the locking members (1, 2), and that when the locking members (1, 2) are in the swung-out position they bear against one another.

4. Locking element according to any one of claims 1 to 3, characterised in that slotted guide links (25) for the lever joint (23, 24) are provided at the bell-crank levers bearing the locking claws (6, 7).

## Revendications

1. Elément de verrouillage pour bloquer des colis dans la soute pour le fret d'avions avec deux verrous (1, 2) qui peuvent être poussés en tournant lors du transport à l'intérieur de la soute pour le fret de colis, verrous qui sont disposés dans un boîtier (3) fixé sur le plancher de la soute pour le fret de façon à pouvoir pivoter, qui peuvent s'enfoncer dans ce boîtier et qui peuvent être mis par des ressorts (19, 20) venant en prise de façon excentrique par rapport aux axes de pivotement correspondants (8, 9) dans une position de verrouillage, dans laquelle les verrous (1, 2) font saillie hors du plan de transport (18), les verrous (1, 2) étant fixés dans le boîtier (3) sur les axes de pivotement (8, 9) disposés parallèlement l'un à l'autre à une certaine distance latérale de telle sorte que ses griffes de verrouillage (6, 7 )sont dirigées en des sens opposés , qui se trouvent à peu près perpendiculaires au sens du transport des colis (28, 31, 32), caractérisé en ce que les verrous (1, 2) sont pourvus de surfaces en plan incliné obliques s'étendant en sens opposé sensiblement parallèlement aux axes de pivotement (8, 9) et sont couplés l'un à l'autre par l'intermédiaire d'une articulation à levier (23, 24) venant en prise de façon excentrique par rapport aux axes de pivotement (8, 9).

2. Elément de verrouillage selon la revendication 1, caractérisé en ce que chaque verrou (1, 2) présente un cylindre (14, 15) maintenu de façon à pouvoir tourner autour d'un axe vertical, cylindre qui est disposé dans la hauteur du plancher de la soute pour le fret (28, 31, 32).

3. Elément de verrouillage selon l'une des revendications 1 ou 2, caractérisé en ce que chaque verrou (1, 2) est pourvu d'une butée (26, 27), qui se trouve dans la zone entre les verrous (1, 2) et en ce qu'ils arrivent à l'appui opposé dans la position opposés des verrous (1, 2).

4. Elément de verrouillage selon l'une des revendications 1 à 3, caractérisé en ce que l'on prévoit sur les leviers coudés portant les griffes de verrouillage (6, 7) des coulisseaux de guidage (25) pour l'articulation à levier (23, 24).
